# EUROPÄISCHE PATENTSCHRIFT

(11) **EP 1 307 670 B1**
(45) Veröffentlichungstag und Bekanntmachung des Hinweises auf die Patenterteilung: **10.11.2004**
(21) Anmeldenummer: 01962608.4
(22) Anmeldetag: 04.08.2001
(51) Int. Cl.: F16G 13/02, F16H 7/06, B66D 3/24

(54) **KETTE UND KETTENTRIEB FÜR EIN HEBEZEUG**
CHAIN AND CHAIN TRANSMISSION FOR LIFTING GEAR
CHAINE ET DISPOSITIF D'ENTRAINEMENT A CHAINE POUR OUTIL DE LEVAGE

(30) Priorität: 09.08.2000 DE 10039565
(43) Veröffentlichungstag der Anmeldung: 07.05.2003
(73) Patentinhaber: RUD-Kettenfabrik Rieger & Dietz GmbH U. Co., 73432 Aalen-Unterkochen (DE)
(72) Erfinder: DALFERTH, Hans, 73433 Aalen (DE); SINZ, Rolf, 73450 Heubach (DE)
(74) Vertreter: Grünecker, Kinkeldey, Stockmair & Schwanhäusser
(86) Internationale Anmeldenummer: PCT/DE2001/002989
(87) Internationale Veröffentlichungsnummer: WO 2002/012753

(56) Entgegenhaltungen:
- EP-A- 0 816 717
- EP-B- 0 812 295
- DE-A- 3 615 734
- DE-A- 4 426 506
- US-A- 3 410 085
- US-A- 3 453 823

## Beschreibung

### Stand der Technik

Die Erfindung betrifft eine Kette und einen Kettentrieb gemäß den Oberbegriffen der Ansprüche 1 und 8, siehe DE-A-3 615 734.

Als Hebezeugketten werden - wie beispielsweise aus der EP 0 812 295 B1 bekannt - regelmäßig übliche Rundstahlketten aus geschweißten Gliedern verwendet, deren Querschnitt, wenn man von einer leichten Querschnittserhöhung im Bereich der Schweißwülste der Glieder einmal absieht, praktisch überall gleich groß ist. Mit derartigen Ketten ausgestattete Hebezeuge genügen in vielen Fällen den an sie gestellten Anforderungen. Ungeachtet dessen sind die mit der Entwicklung moderner Hebezeuge betrauten Fachkreise bemüht, sowohl die Tragfähigkeit als auch die Standzeit derartiger Ketten zu erhöhen, wobei sie unterschiedliche Wege beschreiten. So ist es aus der EP 0 816 717 A2 bekannt, anstelle von Rundstahlketten Hebezeugketten aus Ovalgliedern mit einem D-Profilquerschnitt zu verwenden, um im Bereich der üblicherweise planen Böden eines Taschenkettenrades die Flächenpressung zwischen den das Kettenrad liegend passierenden Kettengliedern (Horizontalglieder) und dem Kettenrad zu reduzieren und darüber hinaus eine flächige Abstützung der das Kettenrad stehend passierenden Kettenglieder (Vertikalglieder) zu erzielen. Der durch die vorgenannten Maßnahmen erzielte Fortschritt hält sich in Grenzen, weil einerseits die dynamische Festigkeit der Kettenglieder nach wie vor zu wünschen übrig läßt und andererseits beim Abwälzen der D-Profilkanten der Horizontalglieder an den Flanken der Taschenradzähne während des Einschwenkens der Horizontalglieder in das Taschenrad erhebliche Flächenpressungen wirksam werden. Um die Dauerbruchgefahr insbesondere der Glieder von sogenannten schweren Rundstahlketten, wie sie vornehmlich im Untertagebergbau zum Einsatz gelangen, zu reduzieren, ist es aus der DE 44 26 506 A1 bekannt, als Rundstahlglieder ausgebildete Kettenglieder im Bereich ihrer Längsschenkel zwecks Verringerung der inneren Breite zusammenzudrücken. Dieses Verfahren birgt insbesondere im Falle der Anwendung bei Hebezeugketten mit kurzer Teilung die Gefahr unzulässig großer Verformungen der Schweißstellen in sich und dies ganz abgesehen davon, daß die Bewegung der Kettenglieder zueinander eingeschränkt wird und die Abstützverhältnisse derartiger Kettenglieder in den Taschen und Nuten von Taschenkettenrädern nicht zu befriedigen vermögen.

Bekannt ist schließlich eine ebenfalls für den Bergbau bestimmte, in der DE 36 15 734 A1 beschriebene Gliederkette, deren ovale Kettenglieder im Bereich ihrer Buge einen kreisförmigen Querschnitt aufweisen, während ihre Längsschenkel über einen unrunden Querschnitt verfügen, dessen längere Querschnittsachse größer ist als die lichte Weite der Glieder. Mit der bekannten Kette wird insbesondere das Ziel verfolgt, eine praktisch verklankungsfreie Zugkette zu schaffen, die insbesondere für den Einsatz in Kratzerförderern geeignet ist. Es versteht sich, daß bei derartigen Förderern im Hinblick auf die im Verhältnis zu Hebezeugketten vergleichsweise niedrigen Arbeitsgeschwindigkeiten der dynamischen Festigkeit gegenüber der Dehnungsfestigkeit eine weniger bedeutsame Rolle zukommt.

### Darstellung der Erfindung

Der Erfindung liegt die Aufgabe zugrunde, unter Beibehaltung günstiger Einschwenkverhältnisse zwischen den Horizontalgliedern und dem Kettenrad die für die Funktion eines Kettenzuges wesentlichen Bauteile, nämlich die zum Anheben der Last dienende Kette mit oder ohne das zum Antrieb der Kette dienenden Kettenrades, somit den Kettentrieb selbst, im Sinne einer Erhöhung der dynamischen Festigkeit zu verbessern. Gelöst wird diese Aufgabe durch die sich aus den Ansprüchen 1 und 8 ergebenden Maßnahmen.

Durch die erfindungsgemäße Ausbildung der Kette wird vor allem deren dynamische Dauerfestigkeit spürbar erhöht, wobei nicht nur die Querschnittsveränderung, sondern auch die durch die plastische Verformung im Rahmen eines Kaltstauchvorganges erzielte Gefügeverdichtung im Bereich der Buge der Kettenglieder maßgeblich zum erzielten Fortschritt beiträgt. Vorteilhaft wirkt sich darüber hinaus der Umstand aus, daß durch eine ergänzende gezielte Verformung der Längsschenkel der Kettenglieder deren Querschnitte hinsichtlich ihrer Widerstandsmomente in bisher nicht erreichtem Maße an die belastungsmäßigen Gegebenheiten anpaßbar sind. Die Taschen der zum Antrieb der erfindungsgemäßen Ketten dienenden Taschenkettenräder sind in einer Weise an die Form der die Ketten bildenden Kettenglieder angepaßt, die ebenfalls einer Standzeit- und Festigkeitserhöhung zugute kommt.

### Kurze Beschreibung der Zeichnungen

Weitere Merkmale und Einzelheiten der Erfindung ergeben sich aus den Ansprüchen, der nachstehenden Beschreibung und der beigefügten Zeichnung, deren Figuren folgendes zeigen:
- Fig. 1: schematisch und teilweise im Schnitt die im Rahmen der Erfindung interessierenden wesentlichen Bauteile eines Kettentriebes;
- Fig. 2: die perspektivische Ansicht des Kettenrades und mehrerer Kettenglieder des Kettentriebes gemäß Fig. 1;
- Fig. 3: im vergrößerten Maßstab einen Teilschnitt durch das Kettenrad gemäß Fig. 1 und 2;
- Fig. 4: die perspektivische Ansicht eines Teilstückes des im Kettentrieb gemäß Fig. 1 bis 3 verwendeten Kettenstranges;
- Fig. 5: die perspektivische Ansicht eines Teilstückes eines ersten modifizierten Kettenstranges;
- Fig. 6: die perspektivische Ansicht eines Teilstückes eines zweiten modifizierten Kettenstranges;
- Fig. 7: die Draufsicht auf ein Horizontalglied des Kettenstranges gemäß Fig. 6;
- Fig. 8: einen Schnitt längs der Linie VIII-VIII in Fig. 7;
- Fig. 9: einen Schnitt längs der Linie IX-IX in Fig. 7;
- Fig. 10: die Draufsicht auf ein Vertikalglied des Kettenstranges gemäß Fig. 6;
- Fig. 11: einen Schnitt längs der Linie XI-XI in Fig. 10 und
- Fig. 12: einen Schnitt längs der Linie XII-XII in Fig. 10.

### Wege zur Ausführung der Erfindung

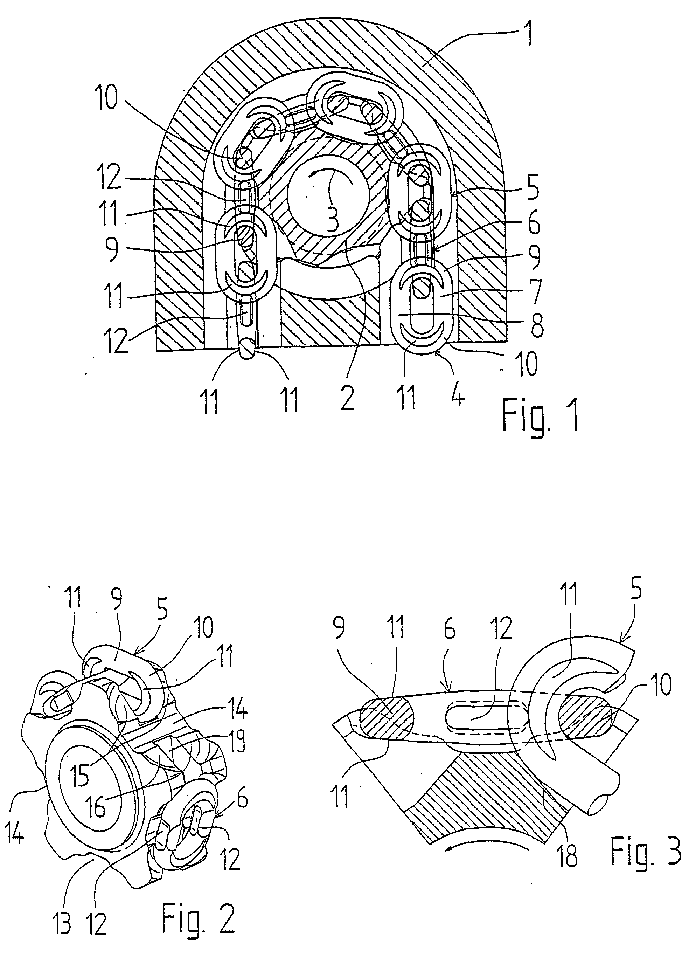

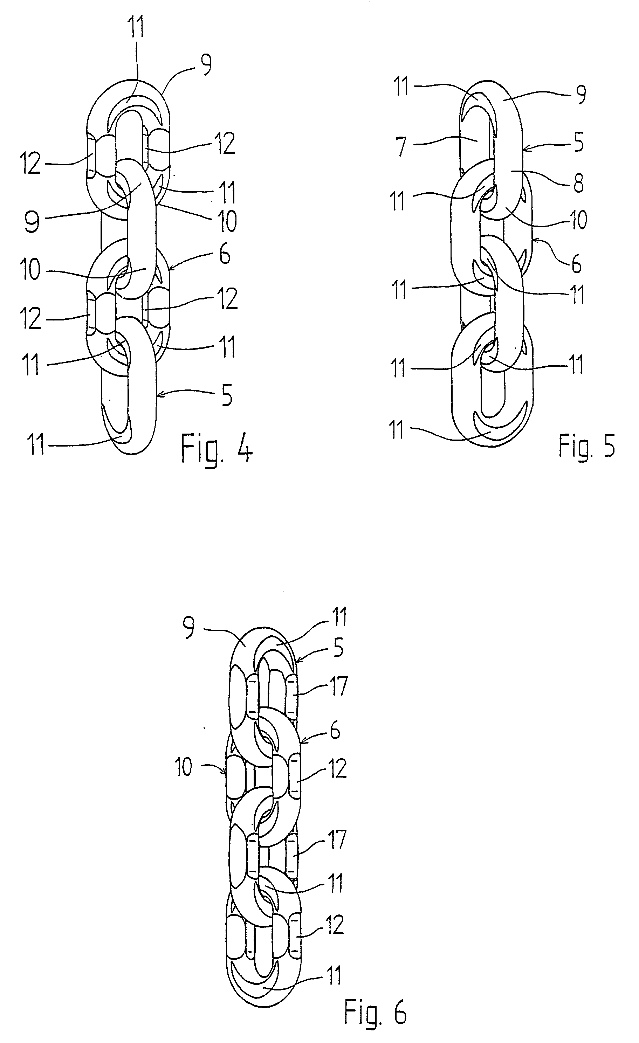

In Fig. 1 ist 1 das Gehäuse des mit einem Taschenkettenrad 2 ausgestatteten Kettentriebes eines Hebezeuges. Der Pfeil 3 im Bereich der Achse des Kettenrades 2 zeigt die Drehbewegung des Rades während des Lasthubes an. Über das Kettenrad 2 ist eine Kette 4 geführt, die aus Vertikalgliedern 5 und Horizontalgliedern 6 besteht. Sämtliche Kettenglieder 5 und 6 weisen im Bereich ihrer durch parallele Längsschenkel 7, 8 miteinander verbundenen Buge 9, 10 durch örtliche plastische Kaltverformung erzeugte abgeplattete Zonen 11 auf. Die Horizontalglieder 6 sind im Bereich ihrer Längsschenkel 7, 8 an sich jeweils gegenüberliegenden Seiten mit zusätzlichen durch örtliche plastische Verformung erzeugten abgeplatteten Zonen 12 versehen, die im wesentlichen senkrecht zu einer durch die Mitten beider Längsschenkel 7, 8 verlaufenden Ebene stehen. Die Abplattungen an den Gliedern werden vor der Wärmebehandlung der Kette vorgenommen, d.h. in der Praxis: Es wird zunächst eine übliche Rundstahlkette hergestellt und deren Ovalglieder werden anschließend durch geeignete Staucheinrichtungen an bestimmten Stellen plastisch deformiert. Durch die Deformation der Kettenglieder 5, 6 im Bereich ihrer Buge 9, 10 wird nicht nur die Dauerschwingfestigkeit der Glieder erhöht, sondern es werden darüber hinaus günstige Auflageverhältnisse zwischen den Horizontalgliedern 6 und den Böden der Taschen 13 des Taschenkettenrades 2 geschaffen. Die Taschen 13 weisen zu diesem Zweck beidseits einer Vertiefung 14 schräge Auflageflächen 15, 16 für abgeplattete Zonen 11 der Buge 9, 10 der Horizontalglieder 6 auf. Die plastische Verformung der Längsschenkel 7, 8 der Horizontalglieder 6 erhöht deren Biegefestigkeit, was sich insbesondere beim Einschwenken dieser Glieder in das Taschenkettenrad positiv auswirkt. In Fällen, in denen mit einem Hebezeug nur vergleichsweise kleine Lasten angehoben bzw. abgesenkt werden, kann gegebenenfalls auf Abplattungen im Bereich der Längsschenkel 7, 8 verzichtet und eine Kette der in Fig. 5 dargestellten Art verwendet werden. Die durch das Anstauchen der Kettenglieder 5, 6 im Bugbereich bewirkte Querschnitts- und Gefügeveränderung führt auch bei dieser Kette zu einer spürbaren Erhöhung der Dauerschwingfestigkeit.

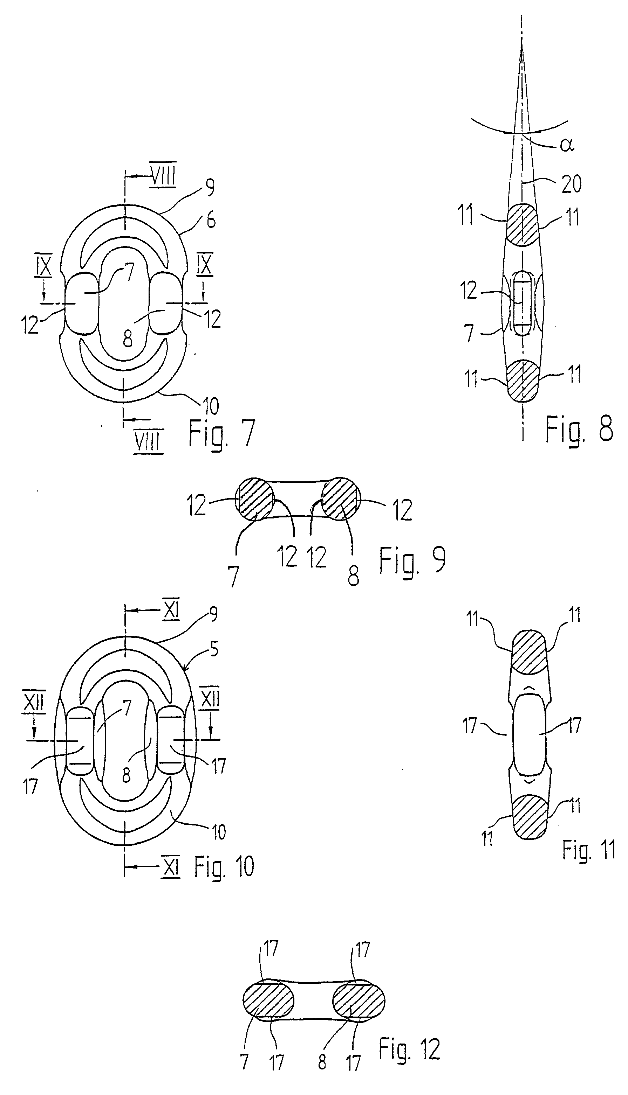

Als optimal kann eine Kette der in Fig. 6 dargestellten Art angesehen werden, bei der auch die Längsschenkel 7, 8 der Vertikalglieder 5 an sich gegenüberliegenden Seiten jeweils eine im wesentlichen parallel zu der durch die Mitten beider Längsschenkel 7, 8 verlaufenden Ebene orientierte abgeplattete Zone 17 aufweisen. Die zusätzliche plastische Verformung der Längsschenkel 7, 8 der Vertikalglieder 5 erhöht deren Biegefestigkeit in ähnlicher Weise, wie die abgeplatteten Zonen 12 dies bei den Horizontalgliedern 6 tun. Zum besseren Verständnis ist in den Fig. 8 bis 9 ein Horizontalglied 6 und in den Fig. 10 bis 12 ein Vertikalglied 5 der Kette gemäß Fig. 6 jeweils in der Draufsicht und in zwei Schnitten dargestellt. Es versteht sich, daß der Boden 18 der Führungsnuten 19 eines mit einer Kette gemäß Fig. 6 ausgestatteten Kettenrades der Form der Vertikalglieder 5 angepaßt sein muß.

In Fig. 8 ist gezeigt, daß die Ebenen, in denen die abgeplatteten Zonen 11 eines Zonenpaares liegen, außerhalb des Kettengliedes 6 die durch die Mitte der Buge 9, 10 und der Längsschenkel 7, 8 verlaufende Längsebene 20 des Kettengliedes 6 schneiden, wobei sie einen Winkel a von 10° zwischen sich einschließen.

## Patentansprüche

1. Kette (4) insbesondere Hebezeugkette, mit aus Rundstahlmaterial hergestellten, durch gerade Längsschenke (7, 8) miteinander verbundene Buge (9, 10) aufweisenden ovalen Kettengliedern (5, 6) **dadurch gekennzeichnet, daß** die Kettenglieder (5, 6) im Bereich der sich gegenüberliegenden seitlichen Flanken ihrer Buge (9, 10) durch örtliche plastische Verformung erzeugte, sich über die gesamte Krümmung des jeweiligen Buges (9, 10) erstreckende, abgeplattete seitliche Zonen (11) aufweisen.

2. Hebezeugkette nach Anspruch 1, **dadurch gekennzeichnet, daß** jeder Bug (9, 10) an seinen sich gegenüberliegenden Seiten mit jeweils einer abgeplatteten Zone (11) versehen ist.

3. Hebezeugkette nach Anspruch 2, **dadurch gekennzeichnet, daß** die Ebenen, in denen die abgeplatteten Zonen (11) eines Zonenpaares liegen, außerhalb des Kettengliedes (5, 6) die durch die Mitte der Buge (9, 10) und durch die Längsschenkel (7, 8) verlaufende Längsebene (20) des Kettengliedes (5, 6) schneiden.

4. Hebezeugkette nach Anspruch 3, **dadurch gekennzeichnet, daß** die jeweils einem Bug (9, 10) zugeordneten abgeplatteten Zonen (11) einen Winkel (α) von etwa 5 - 20° zwischen sich einschließen.

5. Hebezeugkette nach einem der Ansprüche 1 bis 4, **dadurch gekennzeichnet, daß** sie Kettenglieder (6) aufweist, die auch im Bereich ihrer Längsschenkel (7, 8) mit durch örtliche plastische Verformung erzeugten abgeplatteten Zonen (12) versehen sind.

6. Hebezeugkette nach Anspruch 5, **dadurch gekennzeichnet, daß** jeder Längsschenkel (7, 8) mindestens jedes zweiten Kettengliedes (6) an sich gegenüberliegenden Seiten jeweils eine im wesentlichen senkrecht zu der durch die Mitten beider Längsschenkel (7, 8) verlaufenden Ebene orientierte, abgeplattete Zone (12) aufweist.

7. Hebezeugkette nach Anspruch 5 oder 6, **dadurch gekennzeichnet, daß** die Längsschenkel (7, 8) jedes zweiten Kettengliedes (5) an sich gegenüberliegenden Seiten jeweils eine im wesentlichen parallel zu der durch die Mitten beider Längsschenkel (7, 8) verlaufenden Längsebene (20) orientierte, abgeplattete Zone (17) aufweisen.

8. Kettentrieb für Hebezeuge, mit einer durch ein Taschenkettenrad angetriebenen, an einem ihrer beiden freien Enden eine Last zu tragenden Kette, deren aus Rundstahlmaterial hergestellte ovale Kettenglieder das Kettenrad im Wechsel als in den Taschen liegende und sich mit ihren Bugen an beidseits jeweils einer zentralen Führungsnut angeordneten Zähnen abstützende Horizontalglieder und als in den zentralen Nuten stehende Vertikalglieder passieren, **dadurch gekennzeichnet, daß** die Buge (9, 10) sowohl der Horizontalglieder (6) als auch der Vertikalglieder (5) an ihren sich jeweils gegenüberliegenden seitlichen Flanken durch örtliche plastische Verformung erzeugte, sich über die gesamte Krümmung des jeweiligen Buges erstreckende, abgeplattete seitliche Zonen (11) aufweisen.

9. Kettentrieb nach Anspruch 8, **dadurch gekennzeichnet, daß** die Längsschenkel (7, 8) der Horizontalglieder (6) der Kette (4) an sich gegenüberliegenden Seiten jeweils eine im wesentlichen senkrecht zum Boden der Taschen (13) des Kettenrades (2) und zu der durch die Mitten beider Längsschenkel (7, 8) verlaufenden Längsebene (20) orientierte abgeplattete Zone (12) aufweisen.

10. Kettentrieb nach Anspruch 8 oder 9, **dadurch gekennzeichnet, daß** die Längsschenkel (7, 8) der Vertikalglieder (5) der Kette (4) an sich gegenüberliegenden Seiten jeweils eine im wesentlichen senkrecht zum Boden (18) der Nuten (19) des Kettenrades (2) und parallel zu der durch die Mitten beider Längsschenkel (7, 8) verlaufenden Längsebene (20) orientierte abgeplattete Zone (17) aufweisen.

11. Kettentrieb nach einem der Ansprüche 8 bis 10, **dadurch gekennzeichnet, daß** die Böden der Taschen (13) des Taschenkettenrades (2) beidseits einer zentralen Vertiefung (14) mit schrägen Auflageflächen (15, 16) versehen sind, deren Schräge derart an die Schräge (α/2) der abgeplatteten Zonen der Kettenglieder angepaßt ist, daß die in den Taschen (13) zu liegen kommenden, abgeplatteten Zonen der Bugbereiche flächig abgestützt werden.

## Claims

1. Chain (4), in particular lifting gear chain, having oval chain links (5, 6) which are produced from round steel material and have rounded ends (9, 10) which are connected to one another by straight longitudinal limbs (7, 8), **characterized in that** the chain links (5, 6) have flattened lateral zones (11) which are produced by local, plastic deformation in the region of the opposite, lateral flanks of their rounded ends (9, 10) and extend over the entire curvature of the respective rounded end (9, 10).

2. Lifting gear chain according to Claim 1, **characterized in that** each rounded end (9, 10) is provided on its opposite sides with a respective flattened zone (11).

3. Lifting gear chain according to Claim 2, **characterized in that** the planes in which the flattened zones (11) of a pair of zones lie intersect, outside the chain link (5, 6), that longitudinal plane (20) of the chain link (5, 6) which runs through the centre of the rounded ends (9, 10) and through the longitudinal limbs (7, 8).

4. Lifting gear chain according to Claim 3, **characterized in that** the flattened zones (11) respectively assigned to a rounded end (9, 10) enclose between them an angle (α) of approximately 5 - 20°.

5. Lifting gear chain according to one of Claims 1 to 4, **characterized in that** it has chain links (6) which are also provided in the region of their longitudinal limbs (7, 8) with flattened zones (12) produced by local, plastic deformation.

6. Lifting gear chain according to Claim 5, **characterized in that** each longitudinal limb (7, 8) at least of every second chain link (6) has, on opposite sides, a respective flattened zone (12) which is orientated essentially perpendicularly with respect to the plane running through the centres of the two longitudinal limbs (7, 8).

7. Lifting gear chain according to Claim 5 or 6, **characterized in that** the longitudinal limbs (7, 8) of every second chain link (5) has, on opposite sides, a respective flattened zone (17) orientated essentially parallel to the longitudinal plane (20) running through the centres of the two longitudinal limbs (7, 8).

8. Chain transmission for lifting gear, having a chain which is driven by a pocket chain wheel, can bear a load at one of its two free ends and the oval chain links of which, which are produced from round steel material, alternately pass through the chain wheel as horizontal links, which lie in the pockets and are supported by their rounded ends on teeth arranged on both sides in each case of a central guide groove, and as vertical links standing in the central grooves, **characterized in that** the rounded ends (9, 10) both of the horizontal links (6) and of the vertical links (5) have flattened lateral zones (11) which are produced by local, plastic deformation on their respectively opposite, lateral flanks and extend over the entire curvature of the respective rounded end.

9. Chain transmission according to Claim 8, **characterized in that** the longitudinal limbs (7, 8) of the horizontal links (6) of the chain (4) have, on opposite sides, a respective flattened zone (12) orientated essentially perpendicularly with respect to the bottom of the pockets (13) of the chain wheel (2) and with respect to the longitudinal plane (20) running through the centres of the two longitudinal limbs (7, 8).

10. Chain transmission according to Claim 8 or 9, **characterized in that** the longitudinal limbs (7, 8) of the vertical links (5) of the chain (4) have, on opposite sides, a respective flattened zone (17) which is orientated essentially perpendicularly with respect to the bottom (18) of the grooves (19) of the chain wheel (2) and parallel to the longitudinal plane (20) running through the centres of the two longitudinal limbs (7, 8).

11. Chain transmission according to one of Claims 8 to 10, **characterized in that** the bottoms of the pockets (13) of the pocket chain wheel (2) are provided, on both sides of a central depression (14), with oblique supporting surfaces (15, 16), the slope of which is matched to the slope (α/2) of the flattened zones of the chain links in such a manner that the flattened zones of the rounded-end regions, which zones come to lie in the pockets (13), are extensively supported.

## Revendications

1. Chaîne (4), en particulier chaîne pour engin de levage, avec des maillons ovales (5,6) fabriqués en acier rond et présentant des ressauts (9, 10) raccordés l'un à l'autre par des branches longitudinales droites (7,8), **caractérisée en ce que** les maillons (5,6) présentent, dans la zone des flancs latéraux opposés de leurs ressauts (9,10), des zones latérales aplaties (11) produites par déformation plastique localisée et s'étendant sur toute la courbure du ressaut respectif (9,10).

2. Chaîne pour engin de levage selon la revendication 1, **caractérisée en ce que** chaque ressaut (9,10) est pourvu, sur ses côtés opposés, respectivement, d'une zone aplatie (11).

3. Chaîne pour engin de levage selon la revendication 2, **caractérisée en ce que** les plans, dans lesquels se trouvent les zones aplaties (11) d'une paire de zones, coupent, en dehors du maillon (5,6), le plan longitudinal (20) du maillon (5,6) s'étendant à travers le centre des ressauts (9,10) et à travers les branches longitudinales (7,8).

4. Chaîne pour engin de levage selon la revendication 3, **caractérisée en ce que** les zones aplaties (11) affectées respectivement à un ressaut (9,10) font entre elles un angle inclus (α) d'environ 5 à 20°.

5. Chaîne pour engin de levage selon l'une quelconque des revendications 1 à 4, **caractérisée en ce qu'**elle présente des maillons (6), qui sont également pourvus, dans la zone de leurs branches longitudinales (7,8), de zones aplaties (12) produites par déformation plastique localisée.

6. Chaîne pour engin de levage selon la revendication 5, **caractérisée en ce que** chaque branche longitudinale (7,8) d'au moins chaque deuxième maillon (6) présente, sur les côtés opposés, respectivement, une zone aplatie (12) orientée sensiblement perpendiculairement au plan s'étendant à travers les milieux des deux branches longitudinales (7,8).

7. Chaîne pour engin de levage selon la revendication 5 ou 6, **caractérisée en ce que** les branches longitudinales (7,8) de chaque deuxième maillon (5) présentent, sur les côtés opposés, respectivement une zone aplatie (17) orientée sensiblement parallèlement au plan longitudinal (20) s'étendant à travers les centres des deux branches longitudinales (7,8).

8. Commande par chaîne pour engin de levage, comprenant une chaîne entraînée par une roue à chaîne à poches et destinée à porter une charge à l'une de ses deux extrémités libres, dont les maillons ovales fabriqués en acier rond passent sur la roue à chaîne en alternance sous forme de maillons horizontaux se trouvant dans les poches et s'appuyant par leurs ressauts sur des dents aménagées des deux côtés, respectivement, d'une rainure de guidage centrale et de maillons verticaux dressés dans les rainures centrales, **caractérisé en ce que** les ressauts (9,10) autant des maillons horizontaux (6) que des maillons verticaux (5) présentent, sur leurs flancs latéraux respectivement opposés, des zones latérales aplaties (11) produites par déformation plastique localisée et qui s'étendent sur toute la courbure du ressaut respectif.

9. Commande par chaîne selon la revendication 8, **caractérisée en ce que** les branches longitudinales (7,8) des maillons horizontaux (6) de la chaîne (4) présentent, sur les côtés opposés, respectivement, une zone aplatie (12) orientée sensiblement perpendiculairement au fond des poches (13) de la roue à chaîne (2) et au plan longitudinal (20) s'étendant à travers les centres des deux branches longitudinales (7,8).

10. Commande par chaîne selon la revendication 8 ou 9, **caractérisée en ce que** les branches longitudinales (7,8) des maillons verticaux (5) de la chaîne (4) présentent, sur les côtés opposés, respectivement, une zone aplatie (17) orientée sensiblement perpendiculairement au fond (18) des rainures (19) de la roue à chaîne (2) et parallèlement au plan longitudinal (20) passant à travers les centres des deux branches longitudinales (7,8).

11. Commande par chaîne selon l'une quelconque des revendications 8 à 10, **caractérisée en ce que** les fonds des poches (13) de la roue à chaîne à poches (2) sont pourvus, des deux côtés d'un renfoncement central (14), de surfaces d'appui inclinées (15,16) dont l'inclinaison est adaptée à l'inclinaison (α/2) des zones aplaties des maillons de sorte que les zones aplaties des zones des ressauts qui doivent se trouver dans les poches (13) soient soutenues à plat.
